# EUROPÄISCHE PATENTSCHRIFT

(11) **EP 3 331 626 B1**
(45) Veröffentlichungstag und Bekanntmachung des Hinweises auf die Patenterteilung: **08.01.2020**
(21) Anmeldenummer: 16758097.6
(22) Anmeldetag: 04.08.2016
(51) Int. Cl.: A63H 18/02, B29C 45/14, B29C 45/06, A63H 18/08, A63H 18/12

(54) **FAHRBAHNABSCHNITT EINER AUTORENNBAHN FÜR MODELLFAHRZEUGE**
ROADWAY SECTION OF A MOTOR RACING TRACK FOR MODEL VEHICLES
TRONÇON DE CHAUSSÉE D'UN AUTODROME POUR DES VÉHICULES MINIATURES

(30) Priorität: 06.08.2015 DE 102015010018
(43) Veröffentlichungstag der Anmeldung: 13.06.2018
(73) Patentinhaber: Hesse, Kurt, 90441 Nürnberg 70 (DE)
(72) Erfinder: Hesse, Kurt, 90441 Nürnberg 70 (DE)
(74) Vertreter: Weinmann, Ila
(86) Internationale Anmeldenummer: PCT/EP2016/068638
(87) Internationale Veröffentlichungsnummer: WO 2017/021490

(56) Entgegenhaltungen:
- EP-A1- 0 300 068
- DD-A1- 120 796
- DE-A1-102006 025 951
- DE-U1-202008 005 237
- GB-A- 2 068 754
- US-A- 5 139 198

## Beschreibung

Die Erfindung betrifft einen Fahrbahnabschnitt einer Autorennbahn für Modellfahrzeuge sowie ein Verfahren zur Herstellung eines Fahrbahnabschnitts.

In der DE 20 2008 005 237 U1 wird eine Autorennbahn für Fahrzeugspielzeuge und Bahnteil für die Autorennbahn beschrieben. In der DD 120 796 A1 wird ein Gleisstück für Spiel- und Modellbahnen und Verfahren zu deren Herstellung beschrieben. In der FR 1 304 389 wird eine Fahrbahn für elektrische Spielzeugfahrzeuge beschrieben.

Üblicherweise weisen Fahrbahnabschnitte für Modellfahrzeuge im Wesentlichen zwei Komponenten auf, nämlich ein Straßenelement aus Kunststoff und eine Kontaktschiene als einem elektrisch leitenden Material.

Hierbei bildet das Straßenelement den Fahrbahnbelag, auf welchem die Fahrzeuge fahren, und die Kontaktschiene die Energieversorgung, wobei die Schiene im Wesentlichen eben in dem Straßenelement angeordnet ist, um für fahrende Modellfahrzeuge kein Hindernis darzustellen.

Während für die Herstellung des Straßenelements und der Kontaktschiene jeweils Maschinen zum Einsatz kommen, werden beide Teile miteinander per Hand verbunden bzw. zusammengesetzt.

Dabei weist üblicherweise die Kontaktschiene, ausgestaltet als U-förmige Schiene, an den U-Schenkeln des Profils hervorstehende Bereiche auf, die die U-Schenkel im Wesentlichen an vorgesehenen Positionen verlängern. Ferner weist das Straßenelement Aussparungen auf, welche an die hervorstehenden Bereiche angepasst sind. Nach dem Einsetzen der Kontaktschiene in das Straßenelement werden die hervorstehenden Bereiche in den vorgesehenen Aussparungen des Straßenelements positioniert.

Nach Einsetzen bzw. Positionieren der Schiene in dem Straßenelement werden die an der U-förmigen Schiene hervorstehenden Bereiche, die in den Aussparungen platziert sind, per Hand umgebogen. Somit ist ein Fahrbahnabschnitt für Modellfahrzeuge fertiggestellt. Folglich wird ein Lösen der Schiene von dem Straßenelement verhindert.

Bei derartig gefertigten Fahrbahnabschnitten besteht die Gefahr, dass sich bei häufigem Zusammen- und Auseinanderstecken der Fahrbahnabschnitte die Kontaktschiene von dem Straßenelement löst. Zwar kann ein Nutzer eines derartigen Fahrbahnabschnittes diesen wieder instand setzen, beispielsweise durch Kleben oder nochmaliges Biegen der oben genannten Bereiche der U-förmig ausgebildeten Kontaktschiene.

Jedoch sind derartige Maßnahmen bzw. Reparaturen oder Ausbesserungen nur von zeitlich geringer Dauer, so dass ein Nutzer eines derartigen Fahrbahnabschnittes diesen nachkaufen muss, um seine Autorennbahn weiterhin im vollen Umfang nutzen zu können.

Der Erfindung liegt daher die Aufgabe zu Grunde, einen Fahrbahnabschnitt einer Autorennbahn für Modellfahrzeuge sowie ein Verfahren zur Herstellung des Fahrbahnanschnitts anzugeben, um eine maschinelle Fertigung eines Fahrbahnabschnitts mit einfachen Mitteln zu gewährleisten und um die mechanische Stabilität derart zu erhöhen, dass ein Trennen von Straßenelement und Kontaktschiene erschwert oder gar verhindert wird.

Die Aufgabe wird erfindungsgemäß insbesondere durch die Merkmale der unabhängigen Patentansprüche gelöst.

Weitere vorteilhafte Weiterbildungen der vorliegenden Erfindung sind Gegenstand der Unteransprüche.

Bei einem ersten Aspekte Erfindung ist es vorgesehen, das ein Fahrbahnabschnitt einer Autorennbahn für Modellfahrzeuge ein Straßenelement, welches vorzugsweise eine Straße für Modellfahrzeuge bildet und auf welchem Modellfahrzeuge bewegbar sind, und mindestens eine Kontaktschiene zur Versorgung der Modellfahrzeuge mit Energie aufweist.

Vorteilhafterweise weist die mindestens eine Kontaktschiene eine Lochung auf. Diese gestattet es dem Werkstoff des Straßenelements, insbesondere bei einem Spritzgussverfahren, in die Lochung der mindestens einen Kontaktschiene zu fließen. Somit ist das Straßenelement mit der mindestens einen Kontaktschiene bzw. der in die Lochung eingeflossene Werkstoff des Straßenelements über die Lochung mit der mindestens einen Kontaktschiene verbunden.

Des Weiteren ist es günstig, wenn die mindestens eine Kontaktschiene ein U-Profil aufweist. Ein derartiges U-Profil umfasst vorteilhafterweise zwei im Wesentlichen parallel ausgebildete Schenkel, die über einen Steg miteinander verbunden sind. Somit dienen also vorzugsweise die beiden Schenkel des U-Profils der Befestigung der mindestens einen Kontaktschiene an dem Straßenelement, während der Steg, der die beiden Schenkel des Profils verbindet, der Herstellung eines elektrischen Kontakts von der mindestens einen Kontaktschiene zu einem Modellfahrzeug dient.

Auch ist es bevorzugt, wenn wenigstens einer der Schenkel des U-Profils die Lochung aufweist. Somit ist es also möglich, dass Werkstoffe für das Straßenelement, insbesondere Spritzgusswerkstoffe, die Lochung des wenigstens einen Schenkels durchdringen. Folglich kann die mindestens eine Kontaktschiene fest bzw. unlösbar mit dem Straßenelement verbunden werden.

Des Weiteren ist es bevorzugt, wenn das Straßenelement mit der mindestens einen Kontaktschiene integral verbunden ist. Auf diese Weise kann eine feste und sichere mechanische Verbindung zwischen der Kontaktschiene und dem Straßenelement gewährleistet werden. Somit ist es also möglich, auch bei häufigem Auseinander- und Zusammenstecken zweier Fahrbahnabschnitte ein Lösen der mindestens einen Kontaktschiene von einem Straßenelement zu verhindern. Des Weiteren kann eine integrale Verbindung nur durch Zerstörung des Straßenelements und/oder der mindestens einen Kontaktschiene gelöst werden.

Vorteilhafterweise durchdringt bei einer integralen Verbindung das Material des Straßenelements zumindest teilweise die Lochung der mindestens einen Kontaktschiene. Unter einer teilweisen Durchdringung der Lochung wird in diesem Zusammenhang verstanden, dass das Material des Straßenelements nicht durch die gesamte Lochung bei zum Beispiel einem Spritzguss fließen muss. Vielmehr ist also eine teilweise Durchdringung bzw. ein teilweises Durchfließen des Werkstoffs des Straßenelements durch die Lochung möglich, wobei zum Beispiel in dem Fall, dass die Lochung aus einem oder mehreren kreisrunden Löchern besteht, bereits vorzugsweise dann eine teilweise Durchdringung der Lochung vorliegt, wenn der Werkstoff des Straßenelements beispielsweise durch einen Teil eines Lochs bzw. durch einen Teil aller Löcher hindurchgetreten ist.

Des Weiteren ist es bevorzugt, wenn die Lochung entlang der mindestens einen Kontaktschiene ausgebildet ist. Auf diese Weise kann eine sichere und stabile Befestigung der mindestens einen Kontaktschiene an dem Straßenelement gewährleistet werden.

Günstigerweise umfasst die Lochung Ausnehmungen, insbesondere Löcher, vorzugsweise in regelmäßigen Abständen. Dies erleichtert zum einen die Herstellung einer Lochung für die mindestens eine Kontaktschiene, und zum anderen kann durch die Anordnung der Ausnehmung in regelmäßigen Abständen ein sicherer mechanischer Halt der mindestens einen Kontaktschiene an dem Straßenelement realisiert werden.

Auch ist es bevorzugt, wenn die die Lochung bildenden Ausnehmungen eine beliebige Form, insbesondere eine runde Form, aufweisen. Beispielsweise hat eine runde Form den Vorteil, dass diese leicht herstellbar ist. Dies trifft jedoch auch auf Ausnehmungen zu mit zum Beispiel einem quadratischen oder rechteckigen bzw. einem beliebigen Querschnitt. Auch ist es von Vorteil, wenn die Ausnehmungen einen Querschnitt, insbesondere einen Durchmesser, von vorzugsweise 0,5 bis vorzugsweise 0,8 mm aufweisen. Ausnehmungen mit dem vorgenannten Durchmesser erlauben es günstigerweise, dass ein beispielsweise typischer Spritzgusswerkstoff für das Straßenelement sicher, einfach und schnell durch die Ausnehmung der mindestens einen Kontaktschiene bzw. durch die Lochung treten kann.

Bei einem zweiten Aspekt der Erfindung ist es vorgesehen, ein Verfahren zur Herstellung eines Fahrbahnabschnitts anzugeben.

Es wird ausdrücklich darauf hingewiesen, dass die Merkmale des Fahrbahnabschnitts, wie sie unter dem ersten Aspekte der Erfindung erwähnt werden, einzelnen oder miteinander kombinierbar bei dem Verfahren zur Herstellung eines Fahrbahnabschnitts Anwendung finden können.

Anders ausgedrückt, die oben unter den ersten Aspekt der Erfindung genannten Merkmale betreffend den Fahrbahnabschnitt können auch hier unter dem zweiten Aspekt der Erfindung mit weiteren Merkmalen kombiniert werden.

Vorzugsweise weist der Fahrbahnabschnitt ein Straßenelement und mindestens eine Kontaktschiene auf, wie dies bereits oben unter dem ersten Aspekt der Erfindung vorgestellt wurde.

Das Verfahren umfasst bevorzugterweise nachfolgende Schritte:
Ein bevorzugter Schritt weist ein Erzeugen eines Profils, insbesondere eines U-Profils aus vorzugsweise einem Blech auf. Dabei kann das Blech durch Walzen und/oder durch Formbiegen in genanntes Profil umgeformt werden.

Ein weiterer bevorzugter Schritt weist ein Erzeugen einer Lochung in dem Profil auf. Alternativ ist es auch bei einem weiteren bevorzugten Schritt möglich, dass ein Erzeugen einer Lochung in dem Blech vor dem Erzeugen des Profils stattfindet. Vorzugsweise wird eine Lochung durch Stanzen erzeugt.

Ein weiterer bevorzugter Schritt weist ein Zuschneiden des Profils auf vorbestimmte Längen auf, um mindestens eine Kontaktschiene, insbesondere für ein Straßenelement, zu bilden. Durch das Zuschneiden auf vorbestimmte Längen wird erreicht, das unterschiedliche Längen von zum Beispiel geraden Fahrbahnabschnitten realisierbar sind, aber es können somit auch unterschiedliche Kurvenradien für Fahrbahnabschnitte erzeugt werden. Somit ist also eine breite Palette von Kurven und/oder Geraden und/oder auch Schikanen, wie sie aus dem Stand der Technik bereits bekannt sind, erzeugbar.

Ein weiterer bevorzugter Schritt umfasst ein Einlegen der mindestens einen Kontaktschiene in ein Spritzgusswerkzeug. Auf diese Weise wird die mindestens eine Kontaktschiene innerhalb des Spritzgusswerkzeuges platziert und somit die Position der mindestens einen Kontaktschiene relativ zum Straßenelement vorbestimmt.

In einem weiteren bevorzugten Schritt des Verfahrens wird das Spritzgusswerkzeug geschlossen. Dadurch wird es möglich, Werkstoff zu spritzen, insbesondere Kunststoff in das Spritzgusswerkzeug einzuspritzen.

Ein weiterer bevorzugter Schritt weist ein Spritzen eines Straßenelements auf. Vorzugsweise dringt beim Spritzen das Material der Straßenelements, insbesondere Kunststoff, in die Lochung der mindestens einen Kontaktschiene ein. Dadurch verbindet sich vorteilhafterweise das Straßenelement integral mit der mindestens einen Kontaktschiene. Folglich wird also in diesem Schritt ein Straßenelement bzw. eine Fahrbahnabschnitt hergestellt, bei dem die mindestens eine Kontaktschiene unlösbar, außer durch Zerstörung, mit dem gespritzten Straßenelement hergestellt wurde.

In einem weiteren bevorzugten Schritt wird das Spritzgusswerkzeug geöffnet. Dadurch wird es möglich, ein gespritztes Straßenelement zusammen mit der mindestens einen Kontaktschiene aus dem Spritzgusswerkzeug zu entnehmen, um somit Platz und die Möglichkeit zu schaffen, ein weiteres Straßenelement herzustellen.

Ein weiterer bevorzugter Schritt weist ein Entnehmen des gefertigten Fahrbahnabschnitts auf. Somit ist ein spielbereiter Fahrbahnabschnitt einsatzbereit.

Nachfolgende zwei Schritte werden vorzugsweise nach dem Zuschneiden des Profils ausgeführt.

Einer der zwei Schritte weist vorzugsweise ein Formen von Verbindungsnasen an die mindestens eine Kontaktschiene zur Verbindung einzelner Kontaktschienen bzw. von Fahrbahnabschnitten miteinander auf. Auf diese Weise kann die mindestens eine Kontaktschiene bzw. der Fahrbahnabschnitt so ausgebildet werden, dass dieser mit einem weiteren Fahrbahnabschnitt mittels der Kontaktschiene nach dem Prinzip Stecker/Steckdose verwendbar ist.

Unter dem Formen von Verbindungsnasen wird in diesem Zusammenhang verstanden, dass ein Ende der mindestens einen Kontaktschiene so umgeformt wird, dass dieses eine Art Keilform aufweist. Dadurch wird es möglich, die Verbindungnasen bzw. eine Verbindungsnase auf einfache Weise an einem U-Profil zu platzieren. Folglich weist idealerweise ein Ende der mindestens einen Kontaktschiene eine Verbindungsnase auf, wobei vorzugsweise das andere gegenüberliegende Ende eine Aufnahme für eine Verbindungsnase umfasst bzw. nicht umgeformt wird.

Ein anderer der zwei Schritte weist vorzugsweise ein optionales Formen der mindestens einen Kontaktschiene entlang einer Bahn auf. Dabei ist es günstig, wenn die Bahn S-förmig, einen Radius oder eine beliebige Bahnkurve aufweist. Auf diese Weise können beliebige Streckenführungen für Modellfahrzeuge erzielt werden und somit ein breites Spektrum an Schikanen, Kurven usw. erzielt werden.

Bei einem weiteren bevorzugten Schritt wird das U-Profil aus einem ebenen Blech erzeugt, das vorzugsweise von einem Coil zur Verfügung gestellt wird. Auf diese Weise kann ein kontinuierlicher Betrieb sowie eine einfache Produktion des Profils realisiert werden.

Des Weiteren ist es günstig, wenn das Erzeugen einer Lochung ein Stanzen umfasst. Somit kann einfach und schnell eine Lochung innerhalb eines Profils oder eines Blechs, das anschließend zu einem U-Profil umgeformt wird, erzeugt werden.

Des Weiteren ist es günstig, wenn das Spritzgusswerkzeug einen Drehteller aufweist. Mithilfe eines Drehtellers ist es möglich, einerseits die mindestens eine Kontaktschiene einzulegen und andererseits ein Straßenelement durch Spritzen zusammen mit mindestens einer Kontaktschiene zu verbinden.

Günstigerweise ist eine erste Hälfte bzw. ein erster Teil des Drehtellers zugänglich, um mindestens eine Kontaktschiene in das Spritzgusswerkzeug bzw. in den Drehteller einzulegen und/oder um ein gespritztes Straßenelement bzw. einen fertiggestellten Fahrbahnabschnitt zu entnehmen. Somit kann also in der ersten Hälfte bzw. in dem ersten Teil des Drehtellers nach dem Entnehmen eines gespritzten Straßenelements das Spritzen eines weiteren Straßenelements vorbereitet werden, indem mindestens eine Kontaktschiene in das Werkzeug eingelegt wird.

Des Weiteren ist es günstig, wenn in einer zweiten Hälfte bzw. in einem zweiten Teil des Drehtellers das Straßenelement gespritzt wird. Somit dient die zweite Hälfte bzw. der zweite Teil des Drehtellers also dem Erstellen des Straßenelements bzw. dem integralen Verbinden von Straßenelement und der mindestens einen Kontaktschiene bzw. dem Herstellen des Fahrbahnabschnitts.

Auch ist es günstig, wenn mithilfe des Drehtellers zeitgleich die mindestens eine Kontaktschiene in das Spritzgusswerkzeug, insbesondere in die erste Hälfte bzw. in den ersten Teil des Drehtellers, einlegbar ist, und ein Straßenelement, insbesondere in der zweiten Hälfte bzw. in dem zweiten Teil des Drehtellers, integral mit der mindestens einen Kontaktschiene durch Spritzen verbindbar ist. Auf diese Weise kann also mittels des Drehtellers gewährleistet werden, dass ein Fahrbahnabschnitt in der ersten Hälfte bzw. in dem ersten Teil des Drehtellers vorbereitet wird, während in der zweiten Hälfte bzw. in dem zweiten Teil des Drehtellers dieser gefertigt wird.

Des Weiteren ist es von Vorteil, wenn der Drehteller nach jedem Einlegen der mindestens einen Kontaktschiene und/oder nach jedem Spritzen eines Straßenelements gedreht wird, insbesondere um 180 Grad oder einen beliebigen anderen Winkel , um das Spritzen sowie das Entnehmen und/oder Einlegen zu gestatten. Somit kann also mithilfe einer einfachen Drehung des Drehtellers eine vorbereitete Kontaktschiene in das Spritzgusswerkzeug eingeführt werden, in diesem dann ein Fahrbahnabschnitt durch Spritzen eines Straßenelements hergestellt werden und dieses bei einer weiteren Drehung aus dem Spritzgusswerkzeug entnommen werden.

Ein dritter Aspekt der Erfindung sieht eine Verwendung eines Spritzgusswerkzeugs zur Herstellung eines Fahrbahnabschnittes einer Autorennbahn für Modellfahrzeuge vor.

Es wird darauf hingewiesen, dass die Merkmale des Fahrbahnabschnitts, welche unter dem ersten Aspekt der Erfindung erwähnt werden, einzeln oder miteinander kombinierbar bei der Verwendung eines Spritzgusswerkzeuges Anwendung finden können.

Nachstehend wird die Erfindung anhand eines Ausführungsbeispiels in Verbindung mit der zugehörigen Zeichnung näher erläutert. Diese zeigt schematisch:

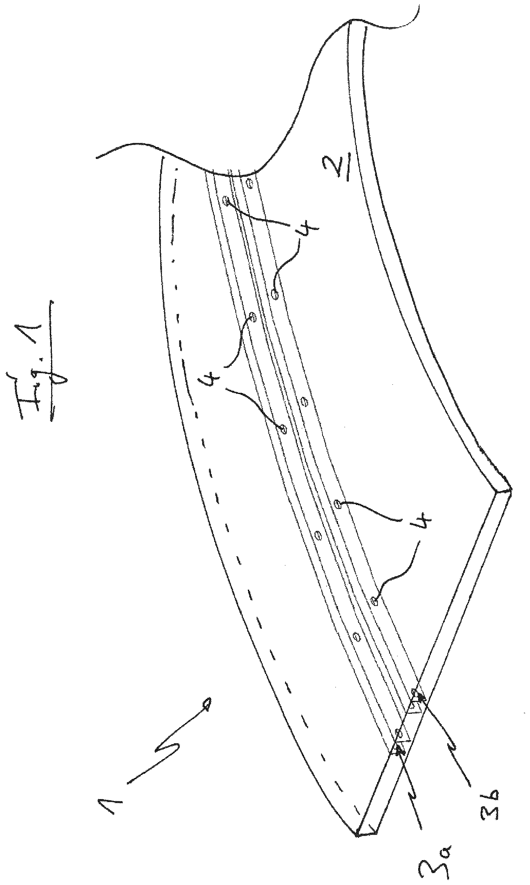

- **Fig. 1**: einen Fahrbahnabschnitt mit einem Straßenelement und einer Kontaktschiene.

In nachfolgender Beschreibung werden gleiche Bezugszeichen für gleiche Gegenstände verwendet.

**Fig. 1** zeigt einen gekrümmten Fahrbahnabschnitt 1 einer Autorennbahn für Modellfahrzeuge. Der Fahrbahnabschnitt 1 weist ein Straßenelement 2 auf, welches eine Straße für Modellfahrzeuge bildet und auf welcher die Modellfahrzeuge fahren können.

Ferner weist der Fahrbahnabschnitt 1 zwei Kontaktschienen 3a, 3b zur Versorgung der Modellfahrzeuge mit Energie auf. Selbstverständlich sind vier oder sogar mehr Kontaktschienen ebenfalls möglich.

Beide Kontaktschienen 3a, 3b haben eine Lochung 4, die es dem Werkstoff des Straßenelements 2 beim Spritzgiessen ermöglicht, hindurch zu treten. Auf diese Weise kann eine integrale Verbindung des Werkstoffs des Straßenelementes 2 mit den Kontaktschienen 3a, 3b ermöglicht werden.

Die Kontaktschienen 3a, 3b weisen jeweils ein U-Profil mit zwei Schenkeln und einem dazwischen angeordneten Steg auf. Die beiden Schenkel umfassen jeweils die Lochung 4. Somit wird die Kontaktschiene bzw. werden beide Kontaktschienen 3a, 3b gleichmäßig sicher und stabil im Straßenelement 2 gehalten.

Wie man ferner Fig. 1 entnehmen kann, ist die Lochung 4 entlang den Kontaktschienen 3a, 3b ausgebildet und dadurch realisiert, dass in dieser Löcher in regelmäßigen Abständen zueinander angeordnet sind.

Im vorliegenden Beispiel sind die Löcher der Lochung 4 kreisrund ausgebildet. Es ist aber auch möglich, dass die Lochung eine beliebig geformte Ausnehmung mit einem beliebigen Querschnitt in den Schenkeln des U-Profils aufweisen kann. Die in Fig. 1 gezeigten Löcher weisen einen Durchmesser von vorzugsweise nur 0,5 bis 0,8 mm auf.

Wie man Fig. 1 auch entnehmen kann, sind die Kontaktschienen 3a, 3b mit einem U-Profil ausgeführt. Dabei - wie bereits oben ausgeführt - sind die beiden Schenkel des U-Profils innerhalb der Kontaktschiene 2 angeordnet, sodass durch diese eine stabile mechanische Verbindung der Kontaktschienen 3a, 3b in dem Straßenelement 2 über die Lochung 4 gewährleistet wird.

Der Steg, der die beiden Schenkel des U-Profils mit jeder der beiden Kontaktschienen 3a, 3b verbindet, ist zumindest auf der Oberseite des Fahrbahnabschnitts 1 frei von Werkstoff des Straßenelements 2, um einen bestmöglichen Kontakt zu einem Modellfahrzeug, das Energie über die Kontaktschienen aufnimmt, zu gewährleisten.

Der Vollständigkeit halber sei erwähnt, dass zwischen den beiden Kontaktschienen 3a, 3b eine Führung für ein Modellfahrzeug, in Form einer Aussparung, angeordnet ist. Damit kann das Modellfahrzeug dem gekrümmten Fahrbahnabschnitt 1 bzw. dessen Verlauf folgen.

Um den in Fig. 1 dargestellten Fahrbahnabschnitt 1 mit einem Straßenelement 2 und Kontaktschienen 3a, 3b günstig herzustellen wird im Nachfolgenden ein Verfahren zur Herstellung eines Fahrbahnabschnitts 1 vorgestellt.

In einem ersten Schritt wird ein U-Profil aus einen ebenen Blech erzeugt. Dies geschieht durch beispielsweise Umformen von einem Blech, das von einem Coil zur Verfügung gestellt wird.

In einem weiteren Schritt wird eine Lochung 4 in dem Profil durch beispielsweise Stanzen erzeugt. Es ist aber auch möglich, dass die Lochung 4 vor dem Formen des U-Profils in dem Blech erzeugt wird, ebenfalls durch Stanzen.

Nachdem das Profil geformt wurde, wird dieses auf vorbestimmbare Längen zugeschnitten, um eine Kontaktschiene zu bilden. Beim Zuschneiden oder während des Zuschneidens oder nach dem Zuschneiden des Profils wird an einer Seite der Kontaktschiene eine Verbindungsnase geformt. Diese dient dem Zusammenstecken bzw. Verbinden zweier Fahrbahnabschnitte 1 nach Art des Stecker/Steckdose-Prinzips.

Um beispielsweise eine Kurve oder einen gekrümmten Streckenverlauf einer Autorennbahn, insbesondere für zum Beispiel eine Schikane, zu bilden, wird das zugeschnittene Profil entsprechend geformt. So ist es zum Beispiel für die Realisierung einer Kurve bzw. eines gekrümmten Fahrbahnabschnitts 1 notwendig, die entsprechenden Kontaktschienen mit unterschiedlichen Radien zu formen, aber auch vorab mit unterschiedlichen Längen zu versehen. Das Formen geschieht vorzugsweise mittels einer Biegemaschine.

Nach dem Vorbereiten der Kontaktschienen mit zum Beispiel unterschiedlichen Radien werden diese einem Spritzgusswerkzeug zugeführt.

Das Spritzgusswerkzeug weist dabei vorzugsweise ein Drehteller auf, dessen eine Hälfte für eine Bestückungsmaschine frei zugänglich ist, um die Kontaktschienen in dem Spritzgusswerkzeug zu positionieren bzw. in dieses einzulegen und vorher eventuell ein gespritztes Straßenelement 2 bzw. einen fertiggestellten Fahrbahnabschnitt 1 zu entnehmen.

In der anderen bzw. zweiten Hälfte des Drehtellers des Spritzgusswerkzeuges wird Werkstoff eingespritzt, um ein Straßenelement 2 zu bilden.

Während des Spritzens des Werkstoffs für das Straßenelement 2 durchdringt dieses die Lochung 4 der Kontaktschienen 3a, 3b, wodurch die Kontaktschienen integral mit dem Straßenelement 2 bzw. über den Werkstoff des Straßenelements verbunden werden.

Zusammengefasst läuft das Verfahren also wie folgt ab.

Mithilfe des Drehtellers werden Kontaktschienen in das Spritzgusswerkzeug bzw. in die erste Hälfte des Drehtellers eingelegt und zeitgleich wird ein Straßenelement in der zweiten Hälfte des Drehtellers integral mit den Kontaktschienen durch Spritzen bzw. durch Fließen des Werkstoffs in die Lochung der Kontaktschiene hergestellt.

Nach dem Spritzen eines Fahrbahnabschnitts eines Straßenelements wird das Spritzgusswerkzeug geöffnet, der Drehteller dreht um 180 Grad, so dass vorbereitete bzw. vorpositionierte Kontaktschienen in der Spritzgusswerkzeug gelangen.

Während das Spritzgusswerkzeug schließt wird der fertiggestellte Fahrbahnabschnitt aus der einen Hälfte des Drehtellers entnommen, um Platz für weitere Kontaktschienen bzw. deren Positionierung in dieser Hälfte des Drehtellers vorzubereiten.

Wie bereits dargelegt, wird während der Bestückung und Entnahme des einen Teils des Drehtellers ein Straßenelement bzw. ein Fahrbahnabschnitt im weiteren Teil des Drehtellers innerhalb des Spritzgusswerkzeuges durch Spritzen von Werkstoff hergestellt.

Dementsprechend ist es auch bevorzugt, ein Spritzgusswerkzeug, zur Herstellung eines Fahrbahnabschnittes einer Autorennbahn für Modellfahrzeuge zu verwenden.

### Bezugszeichenliste

- 1: Fahrbahnabschnitt
- 2: Straßenelement
- 3a, 3b: Kontaktschiene
- 4: Lochung

## Patentansprüche

1. Fahrbahnabschnitt (1) einer Autorennbahn für Modellfahrzeuge mit einem Straßenelement (2), welches vorzugsweise eine Straße für Modellfahrzeuge bildet und auf welchem Modellfahrzeuge bewegbar sind, und mit mindestens einer Kontaktschiene (3a, 3b) zur Versorgung der Modellfahrzeuge mit Energie, wobei die mindestens eine Kontaktschiene (3a, 3b) ein U-Profil aufweist
***dadurch gekennzeichnet, dass***
die mindestens eine Kontaktschiene (3a, 3b) eine Lochung (4) aufweist und das Straßenelement (2) mit der mindestens einen Kontaktschiene (3a, 3b) integral verbunden ist, wobei das Material des Straßenelements (2) zumindest teilweise die Lochung (4) der mindestens einen Kontaktschiene (3a, 3b) durchdringt.

2. Fahrbahnabschnitt nach Anspruch 1, , wobei wenigstens einer der Schenkel des U-Profils die Lochung (4) aufweist.

3. Fahrbahnabschnitt nach einem der vorhergehenden Ansprüche, wobei die Lochung (4) entlang der mindestens einen Kontaktschiene (3a, 3b) ausgebildet ist, und wobei vorzugsweise die Lochung (4) Ausnehmungen, insbesondere Löcher, vorzugsweise in regelmäßigen Abständen umfasst.

4. Fahrbahnabschnitt nach einem der vorhergehenden Ansprüche, wobei die die Lochung (4) bildenden Ausnehmungen eine beliebige Form, insbesondere eine runde Form, aufweisen, und wobei vorzugsweise die Ausnehmungen einen Querschnitt, insbesondere einen Durchmesser, von bevorzugterweise 0,5 bis 0,8 mm aufweisen.

5. Verfahren zur Herstellung eines Fahrbahnabschnitts, insbesondere nach einem der Ansprüche 1 bis 4, wobei der Fahrbahnabschnitt (1) ein Straßenelement (2) und mindestens eine Kontaktschiene (3a, 3b) aufweist, und wobei das Verfahren nachstehende Schritte umfasst:
- Erzeugen eines Profils, insbesondere eines U-Profils, vorzugsweise aus einem Blech,
- Erzeugen einer Lochung (4) in dem Profil oder Erzeugen einer Lochung (4) in dem Blech vor dem Erzeugen des Profils,
- Zuschneiden des Profils auf vorbestimmte Längen, um mindestens eine Kontaktschiene (3a, 3b) zu bilden,
- Einlegen der mindestens einen Kontaktschiene (3a, 3b) in ein Spritzgusswerkzeug,
- Schließen des Spritzgusswerkzeuges,
- Spritzen eines Straßenelements (2), wobei beim Spritzen das Material des Straßenelements (2) in die Lochung (4) der mindestens einen Kontaktschiene (3a, 3b) eindringt, um das Straßenelement (2) integral mit der mindestens einen Kontaktschiene (3a, 3b) zu verbinden,
- Öffnen des Spritzgusswerkzeuges,
- Entnehmen des gefertigten Fahrbahnabschnitts (1).

6. Verfahren nach Anspruch 5, mit nachfolgenden Schritten, die vorzugsweise nach dem Zuschneiden des Profils ausgeführt werden:
- Formen von Verbindungsnasen an die mindestens eine Kontaktschiene (3a, 3b) zur Verbindung einzelner Kontaktschienen miteinander,
- optionales Formen der mindestens einen Kontaktschiene (3a, 3b) entlang einer Bahn, wobei die Bahn S-förmig, einen Radius oder eine beliebige Bahnkurve aufweist.

7. Verfahren nach Anspruch 5 oder 6,
- wobei das U-Profil aus einem ebenen Blech, das vorzugsweise von einem Coil zur Verfügung gestellt wird, erzeugt wird,
- wobei vorzugsweise das Erzeugen einer Lochung (4) ein Stanzen umfasst.

8. Verfahren nach einem der Ansprüche 5 bis 7,
- wobei das Spritzgusswerkzeug einen Drehteller aufweist,
- wobei vorzugsweise eine erste Hälfte des Drehtellers zugänglich ist, um mindestens eine Kontaktschiene (3a, 3b) in das Spritzgusswerkzeug einzulegen und/oder um ein gespritztes Straßenelement (2) zu entnehmen,
- wobei vorzugsweise in einer zweiten Hälfte des Drehtellers das Straßenelement (2) gespritzt wird,
- wobei vorzugsweise mithilfe des Drehtellers zeitgleich die mindestens eine Kontaktschiene (3a, 3b) in das Spritzgusswerkzeug, insbesondere in die erste Hälfte des Drehtellers, einlegbar und ein Straßenelement (2), insbesondere in der zweiten Hälfte des Drehtellers, integral mit der mindestens einen Kontaktschiene (3a, 3b) durch Spritzen verbindbar ist, und
- wobei vorzugsweise der Drehteller nach jedem Einlegen der mindestens einen Kontaktschiene (3a, 3b) und/oder nach jedem Spritzen eines Straßenelements (2) gedreht wird, insbesondere um 180 Grad, um das Spritzen sowie das Entnehmen und/oder Einlegen zu gestatten.

## Claims

1. Track section (1) of a car racing track for model vehicles with a road element (2), which ideally forms a road for model vehicles and on which model vehicles can be moved, and with a minimum of one contact rail (3a, 3b) to supply the model vehicles with energy, wherein the minimum of one contact rail (3a, 3b) has a U-shaped profile
**characterised by the fact that**
the minimum of one contact rail (3a, 3b) has a perforation (4) and the road element (2) to which the minimum of one contact rail (3a, 3b) is integrally connected, wherein the material of the road element (2) at least partially penetrates the perforation (4) in the minimum of one contact rail (3a, 3b).

2. Track section as described in claim 1, wherein at least one of the legs of the U-shaped profile contains the perforation (4).

3. Track section as described in one of the previous claims, wherein the perforation (4) is formed along the minimum of one contact rail (3a, 3b), and wherein ideally the perforation (4) comprises recesses, particularly holes, ideally at regular intervals.

4. Track section as described in one of the previous claims, wherein the recesses forming the perforation (4) has an arbitrary shape, particularly a round shape, and wherein ideally the recesses have a cross-section, in particular a diameter, of ideally 0.5 to 0.8 mm.

5. Process to manufacture a track section, particularly as described in one of claims 1 to 4, wherein the track section (1) has a road element (2) and a minimum of one contact rail (3a, 3b), and wherein the process comprises the following steps:
- Produce a profile, particularly a U-shaped profile, ideally made of sheet metal,
- Produce a perforation (4) in the profile or produce a perforation (4) in the sheet metal before the production of the profile,
- Cut the profile to predetermined lengths to form a minimum of one contact rail (3a, 3b),
- Insert the minimum of one contact rail (3a, 3b) in an injection moulding tool,
- Close the injection moulding tool,
- Mould a road element (2), wherein during the injection moulding process the material of the road element (2) penetrates the perforation (4) of the minimum of one contact rail (3a, 3b) to integrally connect the road element (2) and the minimum of one contact rail (3a, 3b),
- Open the injection moulding tool,
- Remove the finished track section (1).

6. Process as described in claim 5, with the following steps, which are ideally carried out after cutting the profile:
- Form connection lugs on the minimum of one contact rail (3a, 3b) to connect individual contact rails to each other,
- Optionally form the minimum of one contact rail (3a, 3b) along a track, wherein the track has an S shape, a radius or an arbitrary track curve.

7. Process as described in claim 5 or 6,
- wherein the U-shaped profile is made of flat sheet metal, ideally supplied from a coil,
- wherein ideally the production of a perforation (4) comprises a stamping process.

8. Process as described in one of claims 5 to 7,
- wherein the injection moulding tool has a turntable,
- wherein ideally the first half of the turntable is accessible to insert a minimum of one contact rail (3a, 3b) into the injection moulding tool and/or to remove a moulded road element (2),
- wherein ideally the road element (2) is moulded in the second half of the turntable,
- wherein ideally the minimum of one contact rail (3a, 3b) can be inserted into the injection moulding tool using the turntable, particularly into the first half of the turntable, simultaneously with a road element (2), in particular in the second half of the turntable, being integrally connected to the minimum of one contact rail (3a, 3b) by injection moulding, and
- wherein ideally the turntable is rotated after the insertion of the minimum of one contact rail (3a, 3b) and/or after the injection moulding of a road element (2), in particular through 180 degrees to enable the injection moulding process and the removal and/or insertion process to be completed.

## Revendications

1. Tronçon (1) d'un circuit routier pour véhicules miniatures, avec un élément routier (2) qui forme de préférence une route pour véhicules miniatures et sur lequel des véhicules miniatures peuvent se déplacer, et avec au moins un rail de contact (3a, 3b) pour l'alimentation en énergie des véhicules miniatures, ledit au moins un rail de contact (3a, 3b) comportant un profilé en U,
**caractérisé par le fait que,**
ledit au moins un rail de contact (3a, 3b) comporte une perforation (4) et que l'élément routier (2) soit intégralement relié audit au moins un rail de contact (3a, 3b), le matériau de l'élément routier (2) traversant au moins partiellement la perforation (4) dudit au moins un rail de contact (3a, 3b).

2. Tronçon routier selon la revendication 1, pour lequel au moins l'un des bras du profilé en U comporte la perforation (4).

3. Tronçon routier selon l'une des revendications précédentes, pour lequel la perforation (4) est formée le long dudit au moins un rail de contact (3a, 3b), et pour lequel de préférence la perforation (4) comprend des évidements, en particulier des trous, de préférence à intervalles réguliers.

4. Tronçon routier selon l'une des revendications précédentes, pour lequel les évidements formant la perforation (4) présentent une forme quelconque, en particulier une forme ronde, et pour lequel de préférence les évidements présentent une section transversale, en particulier un diamètre, de préférence de 0,5 à 0,8 mm.

5. Procédé de fabrication d'un tronçon routier, en particulier selon l'une des revendications 1 à 4, pour lequel le tronçon routier (1) comporte un élément routier (2) et au moins un rail de contact (3a, 3b), et pour lequel le procédé comprend les étapes suivantes :
- réalisation d'un profilé, en particulier d'un profilé en U, de préférence à partir d'une tôle,
- réalisation d'une perforation (4) dans le profilé ou réalisation d'une perforation (4) dans la tôle avant la réalisation du profilé,
- découpe du profilé à des longueurs prédéfinies, afin de former au moins un rail de contact (3a, 3b),
- insertion dudit au moins un rail de contact (3a, 3b) dans un moule par injection,
- fermeture du moule par injection,
- injection d'un élément routier (2), durant laquelle le matériau de l'élément routier (2) pénètre dans la perforation (4) dudit au moins un rail de contact (3a, 3b) afin de relier intégralement l'élément routier (2) audit au moins un rail de contact (3a, 3b),
- ouverture du moule d'injection,
- retrait du tronçon routier (1) achevé.

6. Procédé selon la revendication 5, avec les étapes suivantes qui seront de préférence exécutées après la découpe du profilé :
- former des nez d'accouplement sur ledit au moins un rail de contact (3a, 3b) pour relier entre eux des rails de contact individuels,
- former optionnellement ledit au moins un rail de contact (3a, 3b) le long d'une trajectoire, la trajectoire présentant une forme en S, un rayon ou une quelconque courbe de trajectoire.

7. Procédé selon les revendications 5 ou 6,
- pour lequel le profilé en U sera fabriqué à partir d'une tôle plate, issue de préférence d'une bobine,
- pour lequel de préférence la réalisation d'une perforation (4) comprend un poinçonnage.

8. Procédé selon une des revendications 5 à 7,
- pour lequel le moule à injection comporte un plateau tournant,
- pour lequel de préférence une première moitié du plateau tournant est accessible afin d'insérer au moins un rail de contact (3a, 3b) dans le moule à injection et/ou afin de prélever un élément routier (2) moulé par injection,
- pour lequel de préférence l'élément routier (2) sera injecté dans la seconde moitié du plateau tournant,
- pour lequel de préférence, à l'aide du plateau tournant, dudit au moins un rail de contact (3a, 3b) peut être inséré simultanément dans le moule à injection, en particulier dans la première moitié du plateau tournant, et un élément routier (2), peut être intégralement relié par injection audit au moins un rail de contact (3a, 3b), en particulier dans la seconde moitié du plateau tournant, et
- pour lequel de préférence on fait pivoter le plateau tournant après chaque insertion dudit au moins un rail de contact (3a, 3b) et/ou après chaque injection d'un élément routier (2), ceci en particulier de 180 degrés, afin de permettre l'injection ainsi que le retrait et/ou l'insertion.
